# FASCICULE DE BREVET EUROPEEN

(11) **EP 3 591 422 B1**
(45) Date de publication et mention de la délivrance du brevet: **29.09.2021**
(21) Numéro de dépôt: 19184828.2
(22) Date de dépôt: 05.07.2019
(51) Int. Cl.: G01S 7/282, G01S 7/40, G01S 13/93

(54) **DISPOSITIF RADAR POUR VÉHICULE AUTOMOBILE ET MÉTHODE DE CONTRÔLE DU DISPOSITIF**
RADARVORRICHTUNG FÜR KRAFTFAHRZEUG UND KONTROLLMETHODE DER VORRICHTUNG
RADAR DEVICE FOR A MOTOR VEHICLE AND METHOD FOR CONTROLLING THE DEVICE.

(30) Priorité: 05.07.2018 FR 1856202
(43) Date de publication de la demande: 08.01.2020
(73) Titulaire: Aptiv Technologies Limited, St. Michael (BB)
(72) Inventeur: VERMERSCH, Jérôme, 77230 Saint Mard (FR); AZZIZ, Maroc, 75017 Paris (FR); COUDRE, Jérôme, 77700 Bailly-Romainvilliers (FR)
(74) Mandataire: Vigand, Philippe

(56) Documents cités:
- US-A- 5 345 470
- US-A1- 2006 109 170
- US-A1- 2010 277 359
- US-A1- 2012 129 459

## Description

### DOMAINE TECHNIQUE

La présente invention concerne un dispositif radar pour véhicule automobile et sa méthode de contrôle. Plus particulièrement, l'invention concerne l'ajustement de la puissance d'émission du signal radar du dispositif en cas d'obturation du champ de vision du radar.

### ARRIERE-PLAN TECHNOLOGIQUE DE L'INVENTION

Les véhicules automobiles sont de plus en plus équipés de système d'aide à la conduite. Une technologie largement utilisée dans ce contexte est le radar. Les systèmes radar aident le conducteur et peuvent être utilisés pour détecter les obstacles à l'avant, à l'arrière ou sur les côtés du véhicule.

Fondamentalement, le principe de la détection radar envoie une onde à fréquence fixe dans une bande fréquence autorisée avec une bande passante donnée. En outre, une certaine puissance d'émission est appliquée pour avoir une plage de détection suffisante pour pouvoir détecter des obstacles distants du véhicule.

Lorsque deux ou plusieurs véhicules équipés de systèmes radar se trouvent à proximité des uns des autres, le champ de vision d'un radar d'un véhicule peut être obturé par un autre véhicule. Cela induit une consommation d'énergie électrique associée au radar inutile.

Le document US 2006/109170 A1 décrit un procédé et un dispositif de régulation adaptative de la puissance d'un système radar, notamment pour des applications mobiles dans le domaine automobile. Ce système radar comprend un émetteur radar et un récepteur radar, transmet des signaux radar et reçoit des signaux radar réfléchis par des objets cibles. Les signaux reçus sont testés. La puissance de transmission de l'émetteur radar est réduite en cas d'irrégularités, lorsque ces irrégularités peuvent être attribuées à des interférences dues à des émetteurs radar voisins.

Il est donc important de proposer une solution nouvelle résolvant ces problèmes.

### RESUME DE L'INVENTION

Selon l'invention, un dispositif radar pour véhicule automobile comprend une antenne radar configurée pour détecter un signal réfléchi caractérisé en tant que réflexion d'un signal émis réfléchi par un objet présent dans le champ de vision de l'antenne radar; un contrôleur configuré pour émettre au moins un signal radar depuis l'antenne radar, le signal radar étant émis selon une puissance d'émission déterminée de détection d'objet ; le contrôleur étant configuré pour détecter le niveau de puissance du signal réfléchi issu du signal radar émis réfléchi par l'objet détecté. Le contrôleur est configuré pour ajuster la puissance d'émission selon le niveau de puissance du signal réfléchi détecté à une puissance minimale suffisante pour la détection de l'objet détecté.

Le contrôleur peut également être configuré pour émettre une pluralité de signaux radar successifs selon la puissance d'émission déterminée, le contrôleur étant configuré pour ajuster la puissance d'émission selon la moyenne des niveaux de puissance des signaux réfléchis détectés.

Le signal réfléchi peut comprendre une pluralité d'ondes réfléchies réparties dans le champ de vision de l'antenne radar de sorte que le contrôleur peut être configuré pour détecter le niveau de puissance et l'orientation angulaire, selon l'axe principal du champ de vision, de chaque onde réfléchie. Le contrôleur est configuré pour déterminer un taux d'obturation du champ de vision de l'antenne radar selon le niveau de puissance et l'orientation angulaire de chaque onde réfléchie détectée. Le contrôleur est configuré pour comparer le taux d'obturation déterminé avec un seuil de taux d'obturation prédéfini. Le contrôleur peut être configuré pour ajuster la puissance d'émission lorsque le taux d'obturation est supérieur au seuil de taux d'obturation prédéfini.

Selon l'invention, une méthode de contrôle d'un dispositif radar comprend les étapes de :
émission d'au moins un signal radar selon une puissance d'émission déterminée de détection d'objet depuis l'antenne radar ;
détection du niveau de puissance du signal réfléchi issu du signal radar émis réfléchi par l'objet détecté ;
caractérisé en ce que la méthode comprend l'étape de :
   ajustement de la puissance d'émission selon le niveau de puissance détecté du signal réfléchi à une puissance minimale suffisante pour la détection de l'objet détecté.

L'étape d'émission peut comprendre l'émission successive d'une pluralité de signaux radar selon une même puissance d'émission prédéfinie et l'étape d'ajustement de la puissance d'émission peut comprendre l'ajustement de la puissance d'émission selon la moyenne des niveaux de puissance des signaux réfléchis détectés.

Le signal réfléchi peut comprendre une pluralité d'ondes réfléchies réparties dans le champ de vision de l'antenne radar de sorte que l'étape de détection du niveau de puissance du signal réfléchi comprend l'étape de détection du niveau de puissance et de l'orientation angulaire, selon l'axe principal du champ de vision, de chaque onde réfléchie. L'étape d'ajustement de la puissance d'émission peut comprendre une étape préalable de détermination d'un taux d'obturation du champ de vision de l'antenne radar selon le niveau de puissance et l'orientation angulaire de chaque onde réfléchie détectée et une étape de comparaison du taux d'obturation déterminé avec un seuil de taux d'obturation prédéfini. L'étape d'ajustement de la puissance d'émission peut comprendre une étape d'ajustement de la puissance d'émission lorsque le taux d'obturation est supérieur au seuil de taux d'obturation prédéfini.

Selon l'invention, une méthode de contrôle d'un dispositif radar agencé dans un véhicule hôte comprend les étapes de :
émettre un signal radar du véhicule hôte selon une puissance déterminée de détection d'objet;
détecter un signal réfléchi issu du signal radar émis ;
déterminer la présence d'un véhicule cible dans le champ de vision du dispositif radar ;
déterminer un taux d'obturation du champ de vision de l'antenne radar ;
comparer le taux d'obturation déterminé avec un seuil de taux d'obturation prédéfini ;
réduire la puissance d'émission du signal radar à une puissance minimale de détection du véhicule cible lorsque le taux d'obturation est supérieur au seuil de taux d'obturation prédéfini.

Selon l'invention, une méthode de détection d'objet par un véhicule hôte comprenant un système de communication entre véhicules comprend les étapes de :
comparaison du taux d'obturation du champ de vision d'un dispositif radar avec le seuil de taux d'obturation prédéfini ;
allouer la fonction de détection d'objet dans le champ de vision du dispositif radar au système de communication entre véhicules lorsque le taux d'obturation est supérieur au seuil de taux d'obturation prédéfini;
déterminer les coordonnées de localisation du champ de vision obturé;
détecter des données reçues par le système de communication entre véhicules relatives à un objet présent dans le champ de vision obturé selon les coordonnées de localisation déterminées.

### BREVE DESCRIPTION DES DESSINS

D'autres caractéristiques, buts et avantages de l'invention apparaîtront à la lecture de la description détaillée qui va suivre, et en regard des dessins annexés, donnés à titre d'exemple non limitatif et sur lesquels:
- La figure 1 est une vue schématique d'un dispositif radar dans un premier mode de fonctionnement selon l'invention.
- La figure 2 est une vue schématique du dispositif radar de la figure 1 selon un second mode de fonctionnement.
- La figure 3 est un organigramme d'une méthode de contrôle du dispositif radar de la figure 1.
- La figure 4 est une représentation schématique de plusieurs dispositifs radars agencés dans un véhicule hôte et fonctionnant dans un mode usuel lors d'un trafic routier important.
- La figure 5 est une représentation schématique de plusieurs dispositif radar agencés dans un véhicule hôte et fonctionnant selon un mode de fonctionnement de l'invention.
- La figure 6 est un organigramme d'une méthode de contrôle du dispositif radar de la figure 1 lorsque le dispositif radar est agencé dans un véhicule hôte.
- La figure 7 est une représentation schématique du véhicule hôte circulant dans un trafic routier important et détectant un objet localisé dans une zone de champ de vision obturé d'un dispositif radar du véhicule hôte.
- La figure 8 est un organigramme d'une méthode de détection d'objet par le véhicule hôte lorsque le champ de vision d'un dispositif radar du véhicule hôte est obturé.

### DESCRIPTION DES MODES DE REALISATION PREFERES

Afin de faciliter la description, et de façon non limitative un axe longitudinal L et un axe transversal T sont définis. Des orientations « gauche », « droite » et « latérale » sont définies selon la direction transversale. Des orientations « avant » et « arrière » sont également définies selon la direction longitudinale.

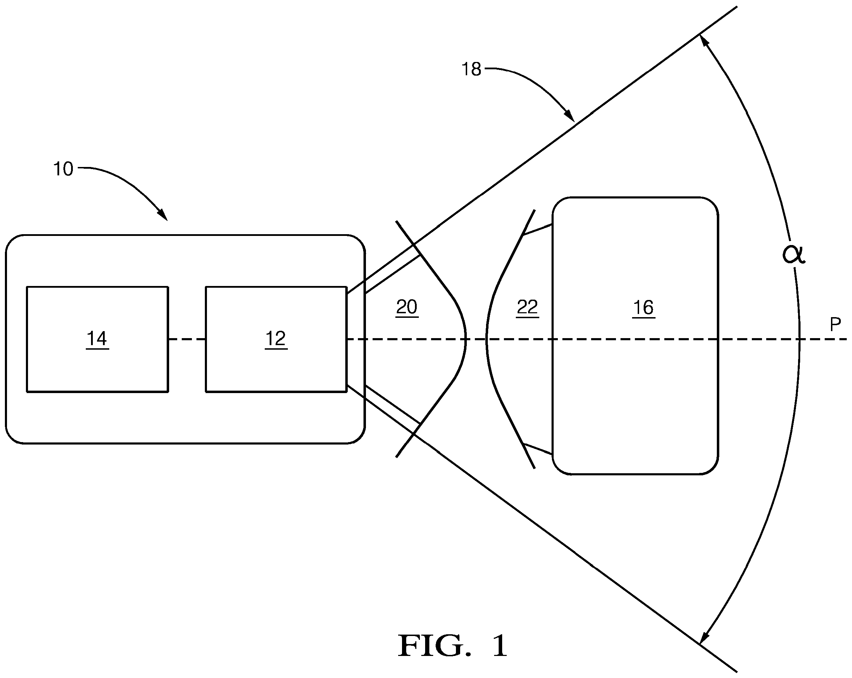

Selon la figure 1, un dispositif radar 10 comprend une antenne radar 12 et un contrôleur 14. Le dispositif radar est configuré pour détecter la présence d'un objet 16 dans le champ de vision 18 de l'antenne radar 12.

Le contrôleur 14 est configuré pour transmettre à l'antenne radar 12 un signal radar de puissance d'émission déterminée, de sorte que l'antenne radar 12 émet le signal radar 20 dans son champ de vision 18 selon son axe principal P d'émission. L'ouverture angulaire α du champ de vision 18 s'étend symétriquement de part et d'autre de l'axe principal P d'émission du dispositif radar 10. Le niveau de la puissance d'émission du signal radar émis 20 et l'ouverture angulaire α du champ de vision 18 de l'antenne radar 12 sont déterminés de sorte à pouvoir détecter l'objet 16 présent dans le champ de vision 18 jusqu'à une distance maximale selon l'axe principal P d'émission du dispositif radar 10.

L'antenne radar 12 est également configurée pour détecter un signal réfléchi 22 caractérisé en tant que réflexion du signal émis 20 réfléchi par l'objet 16 présent dans le champ de vision 18 de l'antenne radar 12. Le contrôleur 14 est également configuré pour détecter le niveau de puissance du signal réfléchi 22 détecté par l'antenne radar 12.

Selon l'invention, le contrôleur 14 est configuré pour ajuster le niveau de la puissance d'émission notamment en fonction du niveau de puissance du signal radar réfléchi détecté. Cette caractéristique du dispositif radar 10 de l'invention permet notamment d'ajuster au mieux la consommation en énergie. Plus particulièrement, le contrôleur 14 est configuré pour ajuster la puissance d'émission, selon le niveau de puissance du signal radar réfléchi 22 détecté, à une puissance minimale suffisante pour la détection de l'objet 16 détecté. En d'autres termes, le contrôleur 14 ajuste la distance maximale de détection d'objet en fonction du niveau de puissance du signal radar réfléchi 22 par le dit objet 16 détecté.

Par exemple et de façon non limitative, si la puissance d'émission du dispositif radar 10 est préalablement déterminée selon un niveau par défaut de sorte à pouvoir détecter un objet 16 jusqu'à une distance de 200 mètres du dispositif radar 10 selon un champ de vision de 150 degrés, et si l'objet 16 détecté se situe à une distance de l'ordre de quelque mètres, alors le niveau de puissance du signal réfléchi 22 par le dit objet sera analysé par le contrôleur 14 comme étant élevé de sorte que le niveau de la puissance d'émission du signal radar émis 20 sera réajusté selon un niveau de puissance d'émission minimal nécessaire pour détecter l'objet 16 localisé à quelque mètres du dispositif radar 10. Cependant, lorsque l'objet 16 sort du champ de vision 18 du dispositif radar 10, alors le niveau de puissance d'émission du signal radar émis 20 est réajusté selon sa valeur par défaut, c'est-à-dire une valeur permettant une détection d'objet jusqu'à 200 mètres selon une ouverture angulaire α du champ de vision de 150 degrés, soit +/- 75 degrés de part et d'autre de l'axe principal P d'émission.

Afin de ne pas constamment ajuster la puissance d'émission du signal radar émis 20, le contrôleur 14 peut être configuré pour émettre une pluralité de signaux radar 20 successifs selon la puissance d'émission déterminée pendant un laps de temps déterminé, le contrôleur 14 étant configuré pour ajuster la puissance d'émission selon la moyenne des niveaux de puissance des signaux réfléchis 22 détectés. Cette méthode d'ajustement de la puissance d'émission du radar signal émis 20 permet également de confirmer la présence d'un objet 16 dans le champ de vision 18 du dispositif radar 10 pendant une laps de temps déterminé.

De façon non limitative, le dispositif radar 10 peut par exemple émettre des signaux radars 20 dans le champ de vision 18 de l'antenne radar 12 tous les 50 millisecondes de sorte que le contrôleur 14 puisse moyenner les niveaux de puissance des signaux réfléchis 22 reçus par l'antenne radar 12 et détectés par le contrôler 14 sur une période de 500 millisecondes.

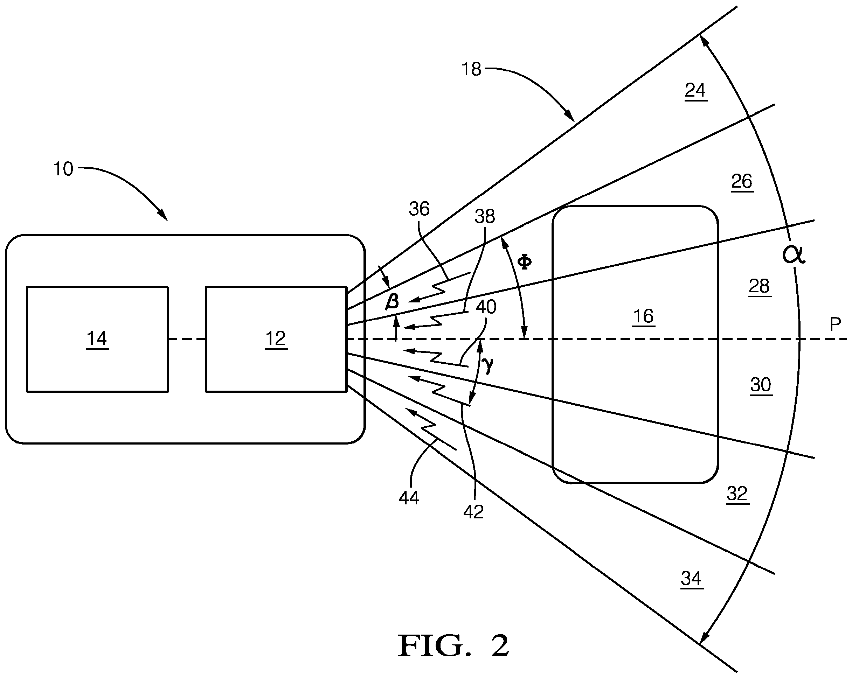

Selon la figure 2, le contrôleur 14 est configuré pour répartir le champ de vision en une pluralité de portion de champ de vision 24, 26, 28, 30, 32, 34 s'étendant de part et d'autre de l'axe principal P d'émission du dispositif radar 10. La pluralité de portion de champ de vision 24, 26, 28, 30, 32, 34 couvre intégralement le champ de vision 18 du dispositif radar 10. Chaque portion de champ de vision 24, 26, 28, 30, 32, 34 est caractérisée par son ouverture angulaire β. De préférence, les portions de champ de vision 24, 26, 28, 30, 32, 34 ont toute une ouverture angulaire β identique. Le contrôleur 14 est configuré pour localiser chaque portion du champ de vision 24, 26, 28, 30, 32, 34 selon sa distance angulaire φ depuis l'axe principal P d'émission du dispositif radar 10.

Selon la figure 2, le signal réfléchi 22 comprend une pluralité d'ondes réfléchies 36, 38, 40, 42, 44 répartie dans le champ de vision 18 de l'antenne radar 12. Chaque onde réfléchie 36, 38, 40, 42, 44 est caractérisée par son orientation angulaire γ selon l'axe principal P du champ de vision 18. Chaque onde réfléchie 36, 38, 40, 42, 44 reçue par l'antenne radar 12 provient d'une portion du champ de vison 26, 28, 30, 32, 34. L'orientation angulaire γ de chaque onde réfléchie 36, 38, 40, 42, 44 permet au contrôleur 14 d'associer chaque onde réfléchie 36, 38, 40, 42, 44 à la portion du champ de vision 26, 28, 30, 32, 34 dans lequel elle se propage vers le dispositif radar 10. Lorsque l'objet détecté 16 est proche de l'antenne radar, le champ de vision 18 est partiellement ou complémente obturé par le dit objet 16. Plus précisément, plus l'objet 16 détecté dans le champ de vision 18 est proche du dispositif radar 10, plus une pluralité de portion du champ de vision 28, 30, 32, 34 est obturée par l'objet 16 détecté. Selon l'invention, le contrôleur est configuré pour déterminer un taux d'obturation du champ de vision 18 de l'antenne radar 12 selon le niveau de puissance et l'orientation angulaire γ de chaque onde réfléchie détectée.

On appelle 'taux d'obturation' le ratio entre les portions de champ de vision obturées 26, 28, 30, 32, 34 et l'ensemble du champ de vision 18. De façon non limitative, une méthode de détermination de l'obturation des portions de champs de vision par le contrôleur 14 consiste à déterminer le niveau de puissance des ondes réfléchies 36, 38, 40, 42, 44 des portions de champs de visions 26, 28, 30, 32, 34 directement adjacentes entre elles, et en détectant un niveau de puissance des ondes réfléchies 36, 38, 40, 42, 44 des portions de champs de vision 26, 28, 30, 32, 34 adjacentes entre elles d'un même ordre de grandeur. L'ordre de grandeur du niveau de puissance des ondes réfléchies 36, 38, 40, 42, 44 des portions champs de visions 26, 28, 30, 32, 34 directement adjacentes entre elles lorsqu'elles sont obturées est généralement détecté et considéré comme élevé par le contrôleur 14, l'objet détecté étant généralement à une distance proche, c'est-à-dire quelques mètres, du dispositif radar 10.

Le contrôleur 14 est configuré pour comparer le taux d'obturation déterminé avec un seuil de taux d'obturation prédéfini.

Le contrôleur 14 peut alors être configuré pour ajuster la puissance d'émission lorsque le taux d'obturation est supérieur au seuil de taux d'obturation prédéfini.

Par exemple et de manière non limitative, la puissance du signal d'émission peut être réduite si le champ de vision 18 est obturé à plus de 90% par l'objet 16 détecté. La puissance d'émission peut être ajustée à une puissance minimale suffisante pour la détection de l'objet 16 présent dans le champ de vision 18.

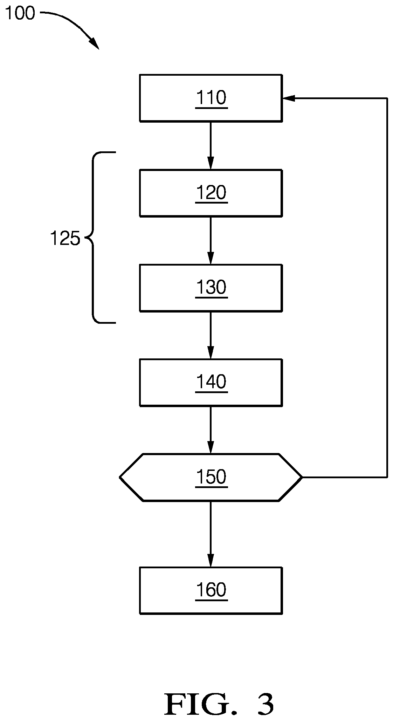

Selon la figure 3, une méthode de contrôle 100 du dispositif radar décrit ci-à la ci-dessus et illustré à la figure 1 comprend plusieurs étapes.

Afin de détecter un objet 16 dans le champ de vision 18 de l'antenne radar 12, la méthode comprend une étape d'émission 110 d'au moins un signal radar 20 selon une puissance d'émission déterminée de détection d'objet depuis l'antenne radar 12 puis une autre étape de détection 125 du niveau de puissance du signal réfléchi 22 issu du signal radar émis 20 réfléchi par l'objet 16 détecté. Afin de limiter la consommation en énergie du dispositif radar 10, une étape de la méthode de contrôle 100 du dispositif radar 10 comprend une étape d'ajustement 160 de la puissance d'émission selon le niveau de puissance détecté du signal réfléchi 22 à une puissance minimale suffisante pour la détection de l'objet 16 détecté.

Pour confirmer la présence de l'objet dans le champ de vision 18, l'étape d'émission 110 du signal radar 20 peut comprendre l'émission successive d'une pluralité de signaux radar 20 selon la même puissance d'émission déterminée, notamment à intervalle de temps régulier puis l'étape d'ajustement 160 de la puissance d'émission s'effectue en fonction de la moyenne arithmétique des niveaux de puissance des signaux réfléchis 22 détectés.

Afin de diminuer la puissance d'émission du signal radar émis 20 lorsque le champ de vision 18 du dispositif radar 10 au-delà de l'objet 16 détecté n'est pas nécessaire, soit parce que le champ de vision 18 est obturé ou soit par ce que le champ de vision non obturé est trop étroit, l'étape d'ajustement 160 de la puissance d'émission est précédée par une étape de comparaison 150 du taux d'obturation du champ de vision 18 avec un seuil de taux d'obturation prédéfini. Enfin l'étape d'ajustement 160 de la puissance d'émission comprend une étape de diminution de la puissance d'émission par défaut du dispositif radar 10 lorsque le taux d'obturation du champ de vision 18 est supérieur au seuil de taux d'obturation prédéfini.

Afin de déterminer le taux d'obturation du champ de vision 18, et puisque le signal réfléchi 22 comprend une pluralité d'ondes réfléchies 36, 38, 40, 42, 44 réparties dans le champ de vision 18 de l'antenne radar 12, l'étape de détection 125 du niveau de puissance du signal réfléchi 22 comprend une étape de détection 120 du niveau de puissance et une étape de détection 130 de l'orientation angulaire y, selon l'axe principal P du champ de vision 18, de chaque onde réfléchie 36, 38, 40, 42, 44. Enfin l'étape de détermination 140 du taux d'obturation de l'antenne radar 12 est donc réalisée selon le niveau de puissance et l'orientation angulaire γ de chaque onde réfléchie 36, 38, 40, 42, 44 détectée.

Il est à noter que lorsque le dispositif radar 10 est configuré selon la puissance ajustée à la puissance minimale de détection de l'objet 16, lorsque l'objet 16 n'est plus détecté, le contrôleur 14 est configuré pour réajuster la puissance d'émission à la puissance nominale par défaut de détection d'objet 16 du dispositif radar 10.

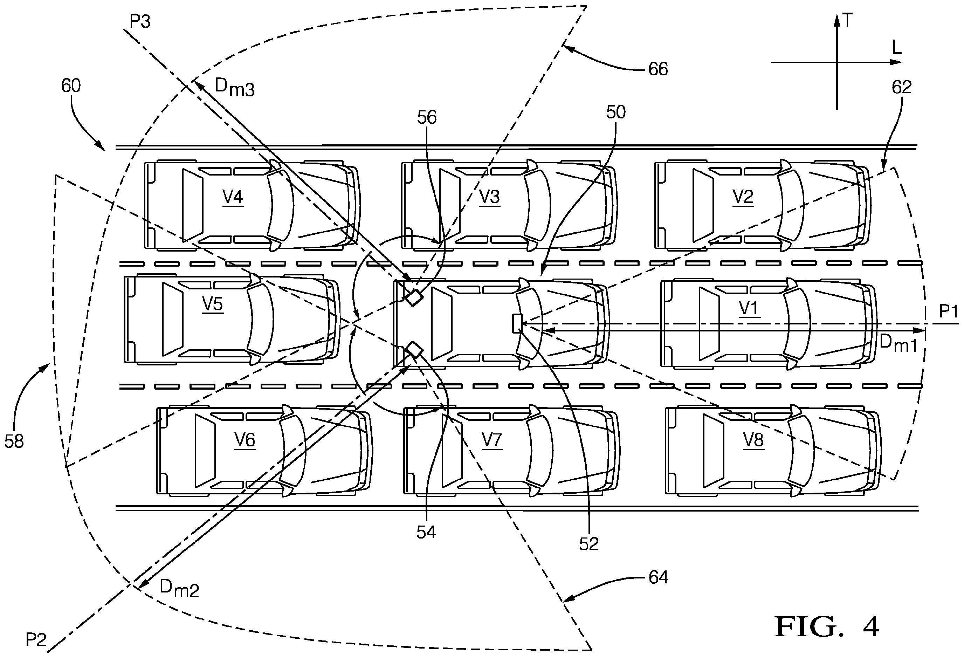

Selon la figure 4, un véhicule hôte 50 comprend trois dispositifs radar similaire au dispositif radar 10 de la figure 1 et de la figure 2. Un premier dispositif radar 52 permet la détection d'objet dans la zone avant du véhicule hôte 10, un second dispositif radar 54 permet la détection d'objet dans la zone arrière droite du véhicule hôte 50 et un troisième dispositif radar 56 permet la détection d'objet dans la zone arrière gauche du véhicule hôte 50. Chaque dispositif radar 52, 54, 56 est configuré pour émettre chacun un signal radar d'émission selon son propre axe principal P1, P2, P3 d'émission dans son propre champ de vision 62, 64, 66.

De façon non limitative à l'invention, le véhicule hôte 50 circule sur la voie centrale 58 d'une route 60 comprenant trois voies. Le véhicule hôte 50 est dans une situation de trafic routier selon lequel une pluralité d'autres véhicules V1, V2, V3, V4, V5, V6, V7, V8 entoure le véhicule hôte 50. Plus particulièrement, des véhicules V1, V2, V3, V4, V5, V6, V7, V8 se trouvent directement à proximité de l'avant du véhicule hôte 50, de l'arrière du véhicule hôte, du côté droit et du côté gauche du véhicule hôte 50, à l'avant gauche et à l'avant droit du véhicule hôte 50, ainsi qu'à l'arrière droit et l'arrière gauche du véhicule hôte 50.

Selon cette situation particulière de trafic routier, les autres véhicules V1, V2, V3, V4, V5, V6, V7, V8 circulent selon la même direction que le véhicule hôte 50. Cette configuration de trafic routier peut par exemple être une situation lors de file d'attente à des péages routiers, à des feux rouges ou encore lors d'embouteillage sur des larges voies telles que des autoroutes.

Selon un fonctionnement usuel, chaque dispositif radar 52, 54, 56 émet un signal radar à une puissance déterminée nominale de détection d'objet de sorte à pouvoir détecter au moins un véhicule V1, V2, V3, V4, V5, V6, V7, V8 cible généralement jusqu'à une distance maximal Dm1, Dm2, Dm3 (figure non à l'échelle) bien supérieure à une dizaine de mètres dans son champ de vision 62, 64, 66. Selon la figure 4, chaque dispositif radar 52, 54, 56 détecte un ou plusieurs véhicules V1, V2, V3, V4, V5, V6, V7, V8 cibles localisés directement à proximité du véhicule hôte 50 de sorte qu'une large portion de chaque champ de vision 62, 64, 66 de chaque dispositif radar 52, 54, 56 est obturée. En d'autre terme, par la présence des véhicules cibles V1, V2, V3, V4, V5, V6, V7, V8 à proximité direct du véhicule hôte 50, chaque dispositif radar 52, 54, 56 du véhicule hôte 50 est dans l'incapacité de détecter directement d'autres véhicules circulant sur la route 60.

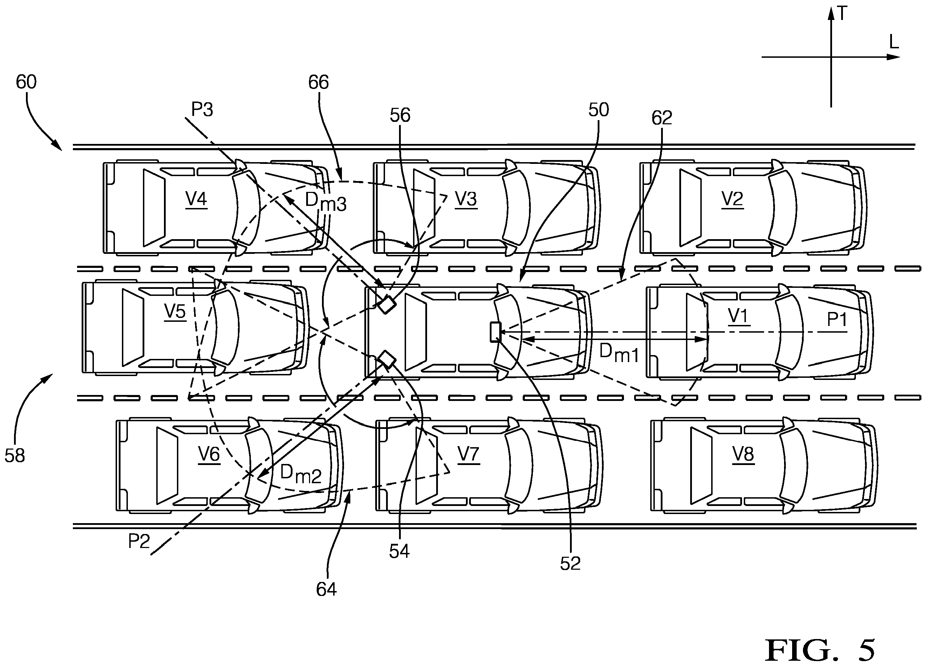

Selon la figure 5, le véhicule hôte 50 est dans la situation de trafic routier identique à la figure 4. Selon la méthode de contrôle 100 du dispositif radar 10 décrite à la figure 3, la distance maximale Dm1, Dm2, Dm3 de détection d'objet de chaque dispositif radar 52, 54, 56 a été réduite en réduisant la puissance d'émission selon un niveau de puissance minimale nécessaire permettant à chaque dispositif radar 52, 54, 56 de détecter les véhicules V1, V2, V3, V4, V5, V6, V7, V8 cibles localisés à proximité direct du véhicule hôte 50. Plus précisément, le contrôleur 14 de chaque dispositif radar 52, 54, 56 a déterminé un taux d'obturation de chaque champ de vision 62, 64, 66 de chaque dispositif radar 52, 54, 5 supérieur à un seuil de taux d'obturation prédéfini.

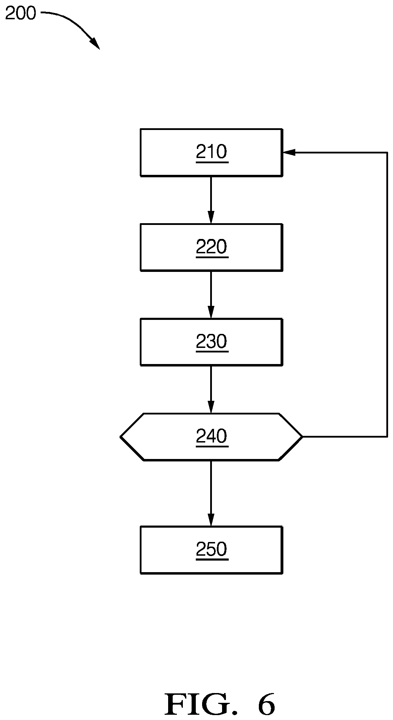

Selon la figure 6, lorsqu'un dispositif radar 52, similaire au dispositif radar 10 décrit et illustré à la figure 1 et à la figure 2, est agencé dans le véhicule hôte 50 comme illustré aux figures 4 et 5, la méthode de contrôle du dispositif radar 52 agencé dans le véhicule hôte 200 comprend plusieurs étapes permettant d'ajuster la puissance d'émission du dispositif radar selon la détection de véhicules cibles. Plus particulièrement, la méthode de contrôle 200 comprend une étape 210 d'émission d'un signal radar 20 du véhicule hôte 50 selon une puissance déterminée de détection d'objet 16. Puis la méthode comprend une étape de détection 220 du signal réfléchi 22 issu du signal radar émis 20 afin de pouvoir déterminer la présence d'un véhicule cible V1 dans le champ de vision 62 du dispositif radar 52. Une étape suivante comprend la détermination 230 du taux d'obturation du champ de vision 62 de l'antenne radar 12 et une étape de comparaison 240 du taux d'obturation déterminé avec un seuil de taux d'obturation prédéfini. Enfin la méthode comprend une étape de réduction 250 de la puissance d'émission du signal radar 20 à une puissance minimale de détection du véhicule V1 cible lorsque le taux d'obturation est supérieur au seuil de taux d'obturation prédéfini.

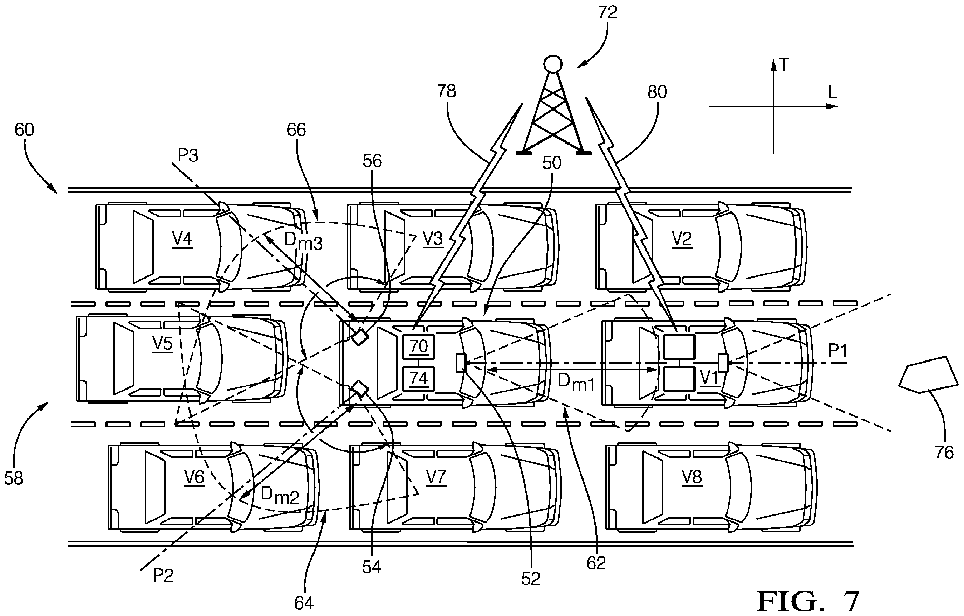

Selon la figure 7, le véhicule hôte 50 est équipé d'un moyen de communication entre véhicules 70 pouvant communiquer directement avec d'autres véhicules V1 ou indirectement avec d'autres véhicules V1 par le biais d'un serveur 72 diffusant des informations reçus d'autres véhicules. Ce système de communication entre véhicules 70 est désigné par le terme anglophone 'vehicle to everything (V2X)'. Le véhicule hôte 50 comprend également un dispositif de détection d'objet 74, le dispositif de détection d'objet 74 étant en communication avec les dispositifs radars 52, 54, 55 tels que décrits aux figures 4 et 5.

Selon l'invention, afin de pouvoir détecter un autre objet 76 localisé dans la zone d'un champ de vision 62 obturé d'un dispositif radar 52 par un véhicule cible V1, et lorsque le dispositif radar 52 a ajusté le niveau de puissance du signal radar émis 20 selon un niveau de puissance réduit, le dispositif de détection d'objet 74 comprenant initialement le dispositif radar 52 se connecte au moyen de communication entre véhicules 70 de sorte à pouvoir détecter des données relatives à la présence d'autres objets 76 dans la portion de son champ de vision obturé.

Plus particulièrement, le véhicule hôte 50 comprend un système de détection d'objet 74 comprenant le dispositif radar 52 et allouant une fonction de détection d'objet dans le champ de vision du dispositif radar 52 au système de communication entre véhicules 70 lorsque le taux d'obturation du champ de vision 62 est supérieur au seuil de taux d'obturation prédéfini. Le système de communication entre véhicules 70 étant configuré pour déterminer les coordonnées de localisation du champ de vision obturé, afin de détecter la présence d'objet 76 dans le champ de vision obturé par le véhicule V1 cible, le système de communication entre véhicules 70 est configuré pour détecter des données 78 reçues par le dit système de communication entre véhicules 70 relatives à un objet 76 présent dans le champ de vision 62 obturé selon les coordonnées de localisation déterminées.

A titre d'exemple et de façon non limitative, selon la figure 7, le véhicule V1 cible localisé à l'avant du véhicule hôte 50 et obturant le champ de vision 62 du premier dispositif radar 52 du véhicule hôte 50 détecte la présence d'un objet 76 via son propre dispositif radar. Les données 80 du véhicule V1 cible relatives à la présence de l'objet 76 détecté et des coordonnées de localisation de l'objet 76 sont diffusées au serveur 72 d'information routière par un dispositif de communication entre véhicule du véhicule V1 cible. Le système de communication entre véhicules 70 du véhicule hôte 50 reçoit les données 78 relatives à la présence de l'objet détecté et à ses coordonnées de localisation de sorte que le système de détection d'objet 74 du véhicule hôte 50 puisse corréler ces informations avec les coordonnées de localisation de la zone du champ de vision obturé. Ainsi le véhicule hôte 50 peut détecter indirectement l'objet localisé dans une zone du champ de vision d'un de ses dispositifs radar 52 obturé.

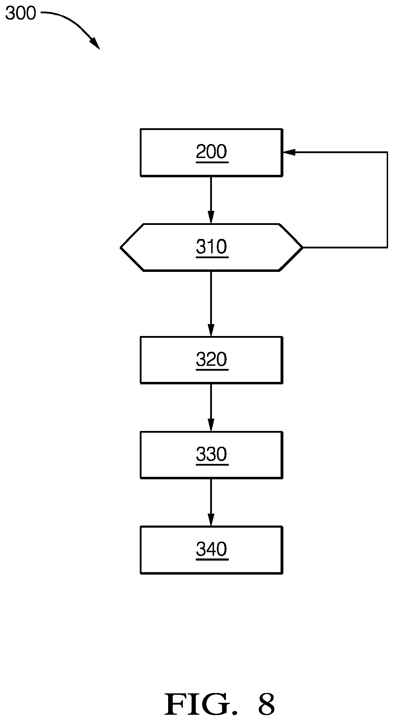

Selon la figure 8, une méthode de détection 300 d'objet 76 par le véhicule hôte 50 comprenant un système de communication entre véhicules 70 et comportant la méthode de contrôle 200 du dispositif radar 52 agencé dans le véhicule hôte 50, comprend une étape de comparaison 310 du taux d'obturation du champ de vision 62 d'un dispositif radar 52 avec le seuil de taux d'obturation prédéfini. Une étape d'allocation 320 d'une fonction de détection d'objet dans le champ de vision 62 du dispositif radar 52 au système de communication entre véhicules 70 lorsque le taux d'obturation est supérieur au seuil de taux d'obturation prédéfini. La méthode détection d'objet 300 comprend une étape de détermination 330 des coordonnées de localisation du champ de vision obturé 62 et enfin une étape de détection 340 des données reçues 78 par le système de communication entre véhicules 70 relatives à un objet 76 présent dans le champ de vision 62 obturé selon les coordonnées de localisation déterminées.

## Revendications

1. Dispositif radar (10) pour véhicule (50) automobile comprenant :
une antenne radar (12) configurée pour détecter un signal réfléchi (22) caractérisé en tant que réflexion d'un signal émis (20) réfléchi par un objet (16) présent dans le champ de vision (18) de l'antenne radar (12);
un contrôleur (14) configuré pour émettre au moins un signal radar (20) depuis l'antenne radar (12), le signal radar (20) étant émis selon une puissance d'émission déterminée de détection d'objet (16); le contrôleur (14) étant configuré pour détecter le niveau de puissance du signal réfléchi (22) issu du signal radar (20) émis réfléchi par l'objet (16) détecté ;
**caractérisé en ce que** le contrôleur (14) est configuré pour ajuster la puissance d'émission selon le niveau de puissance du signal réfléchi (22) détecté à une puissance minimale suffisante pour la détection de l'objet (16) détecté.

2. Dispositif radar (10) selon la revendication précédente **caractérisé en ce que** le contrôleur (14) est configuré pour émettre une pluralité de signaux radar (20) successifs selon la puissance d'émission déterminée, le contrôleur (14) étant configuré pour ajuster la puissance d'émission selon la moyenne des niveaux de puissance des signaux réfléchis (22) détectés.

3. Dispositif radar (10) selon l'une quelconque des revendications précédentes **caractérisé en ce que** le
le signal réfléchi (22) comprend une pluralité d'ondes réfléchies (36, 38, 40, 42, 44) réparties dans le champ de vision (18) de l'antenne radar (18);
le contrôleur (14) est configuré pour détecter le niveau de puissance et l'orientation angulaire (y), selon l'axe principal (P) du champ de vision (18), de chaque onde réfléchie (36, 38, 40, 42, 44);
le contrôleur (14) est configuré pour déterminer un taux d'obturation du champ de vision (18) de l'antenne radar (12) selon le niveau de puissance et l'orientation angulaire (y) de chaque onde réfléchie (36, 38, 40, 42, 44) détectée ;
le contrôleur (14) est configuré pour comparer le taux d'obturation déterminé avec un seuil de taux d'obturation prédéfini ;
le contrôleur (14) est configuré pour ajuster la puissance d'émission lorsque le taux d'obturation est supérieur au seuil de taux d'obturation prédéfini.

4. Méthode de contrôle (100) d'un dispositif radar (10) de l'une quelconque des revendications précédentes la méthode comprenant les étapes de :
émission (110) d'au moins un signal radar (20) selon une puissance d'émission déterminée de détection d'objet (16) depuis l'antenne radar (12);
détection (125) du niveau de puissance du signal réfléchi (22) issu du signal radar émis (20) réfléchi par l'objet (16) détecté ;
**caractérisé en ce que** la méthode (100) comprend l'étape de :
ajustement (160) de la puissance d'émission selon le niveau de puissance détecté du signal réfléchi (22) à une puissance minimale suffisante pour la détection de l'objet (16) détecté.

5. Méthode de contrôle (100) selon la revendication précédente **caractérisé en ce que**
l'étape d'émission (110) comprend l'émission successive d'une pluralité de signaux radar (20) selon une même puissance d'émission prédéfinie ;
l'étape d'ajustement (160) de la puissance d'émission comprend l'ajustement de la puissance d'émission selon la moyenne des niveaux de puissance des signaux réfléchis (22) détectés.

6. Méthode de contrôle (100) selon l'une quelconque des revendications 4 ou 5 pour laquelle le signal réfléchi (22) comprend une pluralité d'ondes réfléchies (36, 38, 40, 42, 44) réparties dans le champ de vision (18) de l'antenne radar (12) ; **caractérisé en ce que**
l'étape de détection (125) du niveau de puissance du signal réfléchi (22) comprend une étape de détection (120) du niveau de puissance de chaque onde réfléchie (36, 38, 40, 42, 44) et une étape de détection (130) de l'orientation angulaire (y), selon l'axe principal (P) du champ de vision (18), de chaque onde réfléchie (36, 38, 40, 42, 44);
l'étape d'ajustement (160) de la puissance d'émission comprend :
une étape préalable de détermination (140) d'un taux d'obturation du champ de vision (18) de l'antenne radar (12) selon le niveau de puissance et l'orientation angulaire (y) de chaque onde réfléchie (36, 38, 40, 42, 44) détectée ;
une étape préalable de comparaison (150) entre le taux d'obturation déterminé et un seuil de taux d'obturation prédéfini ;
l'étape d'ajustement (160) de la puissance d'émission lorsque le taux d'obturation est supérieur au seuil de taux d'obturation prédéfini.

7. Méthode de contrôle (200) d'un dispositif radar (52) agencé dans un véhicule hôte (50) comprenant la méthode (100) de la revendication 6, la méthode de contrôle (200) du dispositif radar (52) agencé dans le véhicule hôte (50) comprenant les étapes de :
émettre (210) un signal radar (20) du véhicule hôte (50) selon une puissance déterminée de détection d'objet (16);
détecter (220) un signal réfléchi (22) issu du signal radar émis (20);
déterminer la présence (230) d'un véhicule cible (V1) dans le champ de vision (62) du dispositif radar (52);
déterminer (230) un taux d'obturation du champ de vision (62) de l'antenne radar (12);
comparer (240) le taux d'obturation déterminé avec un seuil de taux d'obturation prédéfini ;
réduire (250) la puissance d'émission du signal radar (20) à une puissance minimale de détection du véhicule cible (V1) lorsque le taux d'obturation est supérieur au seuil de taux d'obturation prédéfini.

8. Méthode de détection (300) d'objet (76) par un véhicule hôte (50) comprenant la méthode de contrôle (200) du dispositif radar (52) de la revendication 7, le véhicule hôte (50) comprenant un système de communication entre véhicules (70), **caractérisé en ce que** la méthode (300) comprend les étapes de :
comparaison (310) du taux d'obturation du champ de vision (62) du dispositif radar (52) avec le seuil de taux d'obturation prédéfini.
allouer (320) la fonction de détection d'objet (76) dans le champ de vision (62) du dispositif radar (52) au système de communication entre véhicules (70) lorsque le taux d'obturation est supérieur au seuil de taux d'obturation prédéfini;
déterminer (330) les coordonnées de localisation du champ de vision (62) obturé;
détecter (340) des données reçues (78) par le système de communication entre véhicules (70) relatives à un objet (76) présent dans le champ de vision (62) obturé selon les coordonnées de localisation déterminées.

## Patentansprüche

1. Radarvorrichtung (10) für ein Kraftfahrzeug (50) umfassend:
eine Radarantenne (12), die so konfiguriert ist, dass sie ein reflektiertes Signal (22) erkennt, das als eine Abbildung eines gesendeten Signals (20) gekennzeichnet ist, das von einem im Sichtfeld (18) der Radarantenne (12) vorhandenen Objekt (16) reflektiert wird;
eine Steuerung (14), die so konfiguriert ist, dass sie zumindest ein Radarsignal (20) ab der Radarantenne (12) sendet, wobei das Radarsignal (20) mit einer bestimmten Sendeleistung (16) zur Objekterkennung gesendet wird; wobei die Steuerung (14) so konfiguriert ist, dass sie den Leistungspegel des reflektierten Signals (22) erkennt, das aus dem vom erkannten Objekt (16) reflektierten gesendeten Radarsignal (20) hervorgeht;
**dadurch gekennzeichnet, dass** die Steuerung (14) so konfiguriert ist, dass sie die Sendeleistung entsprechend dem Leistungspegel des erkannten reflektierten Signals (22) auf eine Mindestleistung einstellt, die für die Erkennung des erkannten Objekts (16) ausreicht.

2. Radarvorrichtung (10) nach vorstehendem Anspruch, **dadurch gekennzeichnet, dass** die Steuerung (14) so konfiguriert ist, dass sie eine Mehrzahl von aufeinanderfolgenden Radarsignalen (20) entsprechend der bestimmten Sendeleistung sendet, wobei die Steuerung (14) so konfiguriert ist, dass sie die Sendeleistung entsprechend dem Mittelwert der Leistungspegel der erkannten reflektierten Signale (22) einstellt.

3. Radarvorrichtung (10) nach einem beliebigen der vorstehenden Ansprüche, **dadurch gekennzeichnet, dass**
das reflektierte Signal (22) eine Mehrzahl von reflektierten Wellen (36, 38, 40, 42, 44) umfasst, die im Sichtfeld (18) der Radarantenne (18) verteilt sind;
die Steuerung (14) so konfiguriert ist, dass sie den Leistungspegel und die Winkelausrichtung (y), entlang der Hauptachse (P) des Sichtfeldes (18) jeder reflektierten Welle (36, 38, 40, 42, 44) erkennt;
die Steuerung (14) so konfiguriert ist, dass sie ein Verschlussverhältnis des Sichtfeldes (18) der Radarantenne (12) nach dem Leistungspegel und der Winkelausrichtung (y) jeder erkannten reflektierten Welle (36, 38, 40, 42, 44) bestimmt;
die Steuerung (14) so konfiguriert ist, dass sie das bestimmte Verschlussverhältnis mit einem vordefinierten Schwellenwert für das Verschlussverhältnis vergleicht;
die Steuerung (14) so konfiguriert ist, dass sie die Sendeleistung einstellt, wenn das Verschlussverhältnis größer als der vordefinierte Schwellenwert für das Verschlussverhältnis ist.

4. Steuerungsverfahren (100) einer Radarvorrichtung (10) nach einem beliebigen der vorstehenden Ansprüche, wobei das Verfahren die folgenden Schritte umfasst:
Senden (110) zumindest eines Radarsignals (20) entsprechend einer bestimmten Leistung (16) zur Objekterkennung ab der Radarantenne (12);
Erkennen (125) des Leistungspegels des reflektierten Signals (22), das aus dem vom erkannten Objekt (16) reflektierten gesendeten Radarsignal (20) hervorgeht;
**dadurch gekennzeichnet, dass** das Verfahren (100) den folgenden Schritt umfasst:
Einstellen (160) der Sendeleistung entsprechend dem erkannten Leistungspegel des reflektierten Signals (22) auf eine Mindestleistung, die für die Erkennung des erkannten Objekts (16) ausreicht.

5. Steuerungsverfahren (100) nach vorstehendem Anspruch, **dadurch gekennzeichnet, dass**
der Sendeschritt (110) das aufeinanderfolgende Senden einer Mehrzahl von Radarsignalen (20) gemäß einer gleichen vordefinierten Sendeleistung umfasst;
der Schritt (160) zur Einstellung der Sendeleistung die Einstellung der Sendeleistung entsprechend dem Mittelwert der Leistungspegel der erkannten reflektierten Signale (22) umfasst.

6. Steuerungsverfahren (100) nach einem beliebigen der vorstehenden Ansprüche 4 oder 5, bei dem das reflektierte Signal (22) eine Mehrzahl von reflektierten Wellen (36, 38, 40, 42, 44) umfasst, die im Sichtfeld (18) der Radarantenne (12) verteilt sind; **dadurch gekennzeichnet, dass**
der Schritt des Erkennens (125) des Leistungspegels des reflektierten Signals (22) einen Schritt mit Erkennen (120) des Leistungspegels jeder reflektierten Welle (36, 38, 40, 42, 44) und einen Schritt mit Erkennen (130) der Winkelausrichtung (y) jeder reflektierten Welle (36, 38, 40, 42, 44) entlang der Hauptachse (P) des Sichtfelds (18) umfasst;
der Schritt (160) des Einstellens der Sendeleistung folgendes umfasst:
einen vorherigen Schritt mit Bestimmung (140) eines Verschlussverhältnisses des Sichtfeldes (18) der Radarantenne (12) nach dem Leistungspegel und der Winkelausrichtung (y) jeder erkannten reflektierten Welle (36, 38, 40, 42, 44);
einen vorherigen Schritt mit Vergleich (150) zwischen dem bestimmten Verschlussverhältnis und einem vordefinierten Schwellenwert für das Verschlussverhältnis;
den Schritt mit Einstellung (160) der Sendeleistung, wenn das Verschlussverhältnis größer als der vordefinierte Schwellenwert für das Verschlussverhältnis ist.

7. Steuerungsverfahren (200) einer in einem Host-Fahrzeug (50) angeordneten Radarvorrichtung (52) umfassend das Verfahren (100) nach Anspruch 6, wobei das Steuerungsverfahren (200) der im Host-Fahrzeug (50) angeordneten Radarvorrichtung (52) die folgenden Schritte umfasst:
Senden (210) eines Radarsignals (20) vom Host-Fahrzeug (50) mit einer bestimmten Leistung zur Objekterkennung (16);
Erkennen (220) eines reflektierten Signals (22), das aus dem gesendeten Radarsignal (20) hervorgeht; Bestimmen des Vorhandenseins (230) eines Zielfahrzeugs (V1) im Sichtfeld (62) der Radarvorrichtung (52);
Bestimmen (230) eines Verschlussverhältnisses des Sichtfeldes (62) der Radarantenne (12);
Vergleichen (240) des bestimmten Verschlussverhältnisses mit einem vordefinierten Schwellenwert für das Verschlussverhältnis;
Verringern (250) der Sendeleistung des Radarsignals (20) auf eine minimale Erkennungsleistung des Zielfahrzeugs (V1), wenn das Verschlussverhältnis größer ist als der vordefinierte Schwellenwert für das Verschlussverhältnis.

8. Verfahren zum Erkennen (300) eines Objekts (76) durch ein Host-Fahrzeug (50), das das Steuerungsverfahren (200) der Radarvorrichtung (52) nach Anspruch 7 umfasst, wobei das Host-Fahrzeug (50) ein Kommunikationssystem zwischen Fahrzeugen (70) umfasst, **dadurch gekennzeichnet, dass** das Verfahren (300) die folgenden Schritte umfasst:
Vergleich (310) des Verschlussverhältnisses des Sichtfelds (62) der Radarvorrichtung (52) mit einem vordefinierten Schwellenwert für das Verschlussverhältnis.
Zuweisen (320) der Objekterkennungsfunktion (76) im Sichtfeld (62) der Radarvorrichtung (52) zum Kommunikationssystem zwischen Fahrzeugen (70), wenn das Verschlussverhältnis größer ist als der vordefinierte Schwellenwert für das Verschlussverhältnis;
Bestimmen (330) der Ortskoordinaten des verschlossenen Sichtfeldes (62);
Erkennen (340) der vom Kommunikationssystem zwischen Fahrzeugen (70) empfangenen Daten (78) bezüglich eines Objekts (76), das sich im verschlossenen Sichtfeld (62) nach den bestimmten Ortskoordinaten befindet.

## Claims

1. A radar device (10) for a motor vehicle (50) comprising:
a radar antenna (12) configured to detect a reflected signal (22) characterized as a reflection of a transmitted signal (20) reflected by an object (16) present in the field of view (18) of the radar antenna (12);
a controller (14) configured to transmit at least one radar signal (20) from the radar antenna (12), the radar signal (20) being transmitted according to a determined transmission power of object (16) detection; the controller (14) being configured to detect the power level of the reflected signal (22) derived from the transmitted radar signal (20) reflected by the detected object (16);
**characterized in that** the controller (14) is configured to adjust the transmission power, according to the power level of the reflected signal (22) detected, to a minimum power sufficient for the detection of the detected object (16).

2. The radar device (10) according to the preceding claim **characterized in that** the controller (14) is configured to transmit a plurality of successive radar signals (20) according to the determined transmission power, the controller (14) being configured to adjust the transmission power according to the average of the power levels of the reflected signals (22) detected.

3. The radar device (10) according to any one of the preceding claims **characterized in that**
the reflected signal (22) comprises a plurality of reflected waves (36, 38, 40, 42, 44) distributed in the field of view (18) of the radar antenna (18);
the controller (14) is configured to detect the power level and the angular orientation (γ), along the main axis (P) of the field of view (18), of each reflected wave (36, 38, 40, 42, 44);
the controller (14) is configured to determine a rate of obturation of the field of view (18) of the radar antenna (12) according to the power level and angular orientation (γ) of each reflected wave (36, 38, 40, 42, 44) detected;
the controller (14) is configured to compare the determined obturation rate with a preset obturation rate threshold;
the controller (14) is configured to adjust the transmission power when the obturation rate is higher than the preset obturation rate threshold.

4. A method for controlling (100) a radar device (10) of any one of the preceding claims, the method comprising the steps of:
transmitting (110) at least one radar signal (20), according to a determined transmission power of object (16) detection, from the radar antenna (12);
detecting (125) the power level of the reflected signal (22) derived from the transmitted radar signal (20) reflected by the detected object (16);
**characterized in that** the method (100) comprises the step of:
adjusting (160) the transmission power, according to the detected power level of the reflected signal (22), to a minimum power sufficient for the detection of the detected object (16).

5. The control method (100) according to the preceding claim **characterized in that**
the transmission step (110) comprises the successive transmission of a plurality of radar signals (20) according to the same preset transmission power;
the step (160) of adjusting the transmission power comprises the adjustment of the transmission power according to the average of the power levels of the reflected signals (22) detected.

6. The control method (100) according to any one of claim 4 or 5 for which the reflected signal (22) comprises a plurality of reflected waves (36, 38, 40, 42, 44) distributed in the field of view (18) of the radar antenna (12);
**characterized in that**
the step (125) of detecting the power level of the reflected signal (22) comprises a step (120) of detecting the power level of each reflected wave (36, 38, 40, 42, 44) and a step (130) of detecting the angular orientation (γ), along the main axis (P) of the field of view (18), of each reflected wave (36, 38, 40, 42, 44);
the step (160) of adjusting the transmission power comprises:
a prior step (140) of determining a rate of obturation of the field of view (18) of the radar antenna (12) according to the power level and angular orientation (γ) of each reflected wave (36, 38, 40, 42, 44) detected;
a prior step (150) of comparing the determined obturation rate with a preset obturation rate threshold;
the step (160) of adjusting the transmission power when the obturation rate is higher than the preset obturation rate threshold.

7. A method for controlling (200) a radar device (52) arranged in a host vehicle (50) comprising the method (100) of claim 6, the method for controlling (200) the radar device (52) arranged in the host vehicle (50) comprising the steps of:
transmitting (210) a radar signal (20) of the host vehicle (50) according to a determined object detection power (16) ;
detecting (220) a reflected signal (22) derived from the transmitted radar signal (20);
determining the presence (230) of a target vehicle (V1) in the field of view (62) of the radar device (52);
determining (230) a rate of obturation of the field of view (62) of the radar antenna (12);
comparing (240) the determined obturation rate with a preset obturation rate threshold;
reducing (250) the transmission power of the radar signal (20) to a minimum target vehicle (V1) detection power when the obturation rate is higher than the preset obturation rate threshold.

8. A method for detecting (300) an object (76) by a host vehicle (50) comprising the method (200) for controlling the radar device (52) of claim 7, the host vehicle (50) comprising a vehicle-to-vehicle communication system (70), **characterized in that** the method (300) comprises the steps of:
comparing (310) the rate of obturation of the field of view (62) of the radar device (52) with the preset obturation rate threshold.
allocating (320) the function of detecting an object (76) in the field of view (62) of the radar device (52) to the vehicle-to-vehicle communication system (70) when the obturation rate is higher than the preset obturation rate threshold;
determining (330) the location coordinates of the obturated field of view (62);
detecting (340) the data (78), received by the vehicle-to-vehicle communication system (70), relating to an object (76) present in the field of view (62) obturated according to the determined location coordinates.
